# FASCICULE DE BREVET EUROPEEN

(11) **EP 1 384 399 B1**
(45) Date de publication et mention de la délivrance du brevet: **25.10.2006**
(21) Numéro de dépôt: 03360089.1
(22) Date de dépôt: 22.07.2003
(51) Int. Cl.: A01K 5/02

(54) **Dispositif de distribution d'aliments pour élevage**
Viehfütterer
Livestock feeder

(30) Priorité: 23.07.2002 FR 0209301
(43) Date de publication de la demande: 28.01.2004
(73) Titulaire: Ovimax SARL, 57370 Veckersviller (FR)
(72) Inventeur: Untereiner, Denis, 57370 Veckersviller (FR)

(56) Documents cités:
- WO-A-94/27851
- BE-A- 403 865
- DE-A- 3 033 977
- US-A- 2 135 765
- US-A- 4 027 628

## Description

La présente invention se rapporte au domaine général de l'élevage, et plus particulièrement à l'organisation interne d'un bâtiment destiné à l'élevage. Le bâtiment délimitant une surface de déplacement pour des animaux et comportant un dispositif de transport permettant la distribution d'aliments.

Traditionnellement, la distribution de concentrés et de foin se pratique à l'aide de machines encombrantes, onéreuses et non spécifiquement dévolues à cette tâche. Cette pratique occasionne souvent des manoeuvres lourdes voire risquées. Les machines devant pénétrer à l'intérieur des bâtiments qui ne sont pas toujours équipées en conséquence.

Il est également encore connu des bâtiments utilisant des auges dites "trottoirs" pour alimenter le bétail. Ces auges permettent de dérouler des balles cylindriques de foin. Ainsi ces auges "trottoir" occupent une place non négligeable au sein d'un bâtiment.

Un autre procédé consiste à nourrir le bétail manuellement à l'aide de seaux ou d'outils appropriés tels que des fourches, ce qui nécessite beaucoup de temps et représente un caractère pénible à force de répétition quotidienne.

Un bâtiment selon le préambule de la revendication 1 est également connu par DE 30 33 977. Ce bâtiment comporte un dispositif de transport permettant la distribution d'aliment. Ce dispositif de transport connu ne permet que la distribution des aliments d'un côté du chariot distributeur. D'autre part, la distribution des aliments est automatisée ce qui nécessite notamment un système parallèle de reconnaissance de l'animal. Un tel dispositif est relativement cher et nécessite de la maintenance.

Le document FR 2 641 940 se rapporte à un chariot pour la distribution d'aliment équipant un bâtiment d'engraissement de volailles.

La présente invention a pour but d'augmenter la surface utile au sol pour les animaux dans un bâtiment et de faciliter la distribution des aliments tout en évitant les inconvénients précités grâce aux caractéristiques de la partie caractérisante de la revendication 1.

Selon une autre caractéristique de l'invention, ledit dispositif de transport est réglable en hauteur.

D'autres caractéristiques et avantages de l'invention ressortiront de la description ci-après des exemples de réalisation non limitatifs de l'invention, avec référence aux dessins annexés dans lesquels :
- la figure 1 représente une vue en coupe d'un bâtiment comportant un dispositif de transport selon l'invention;
- la figure 2 représente, en vue de dessus, le bâtiment de la figure 1;
- la figure 3 représente une vue de côté, à plus grande échelle, du dispositif de transport de la figure 1 ;
- la figure 4 représente une vue de côté du dispositif de transport en position basculé ;
- la figure 5 représente une vue de côté d'un chariot distributeur selon l'invention;
- la figure 6 représente une vue de dessus du chariot distributeur de la figure 5.

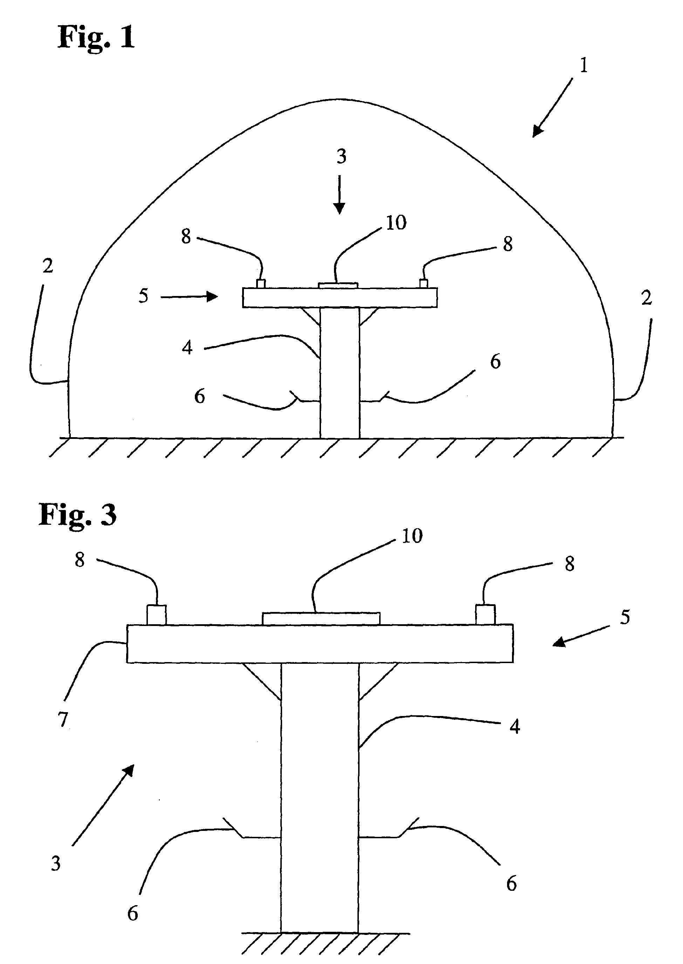

La figure 1 représente un bâtiment (1) dans lequel se déplacent des animaux. Ce bâtiment (1) comporte des parois (2) qui délimite un espace disponible au sol pour les animaux. Ledit bâtiment (1) est réalisé avantageusement sous la forme d'un tunnel. Un tel tunnel est fréquemment utilisé dans l'élevage d'ovins. Le bâtiment (1) peut également être conçu sous la forme d'un hangar particulièrement adapté à l'élevage de bovins. Les parois (2) seraient, dans ce cas, plutôt réalisées sous forme de murs.

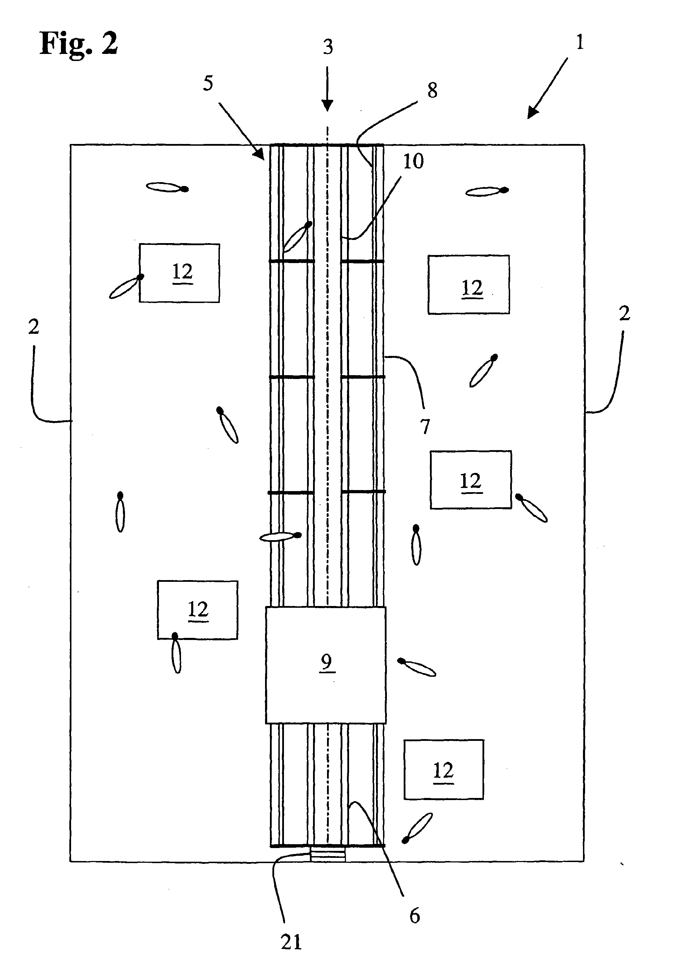

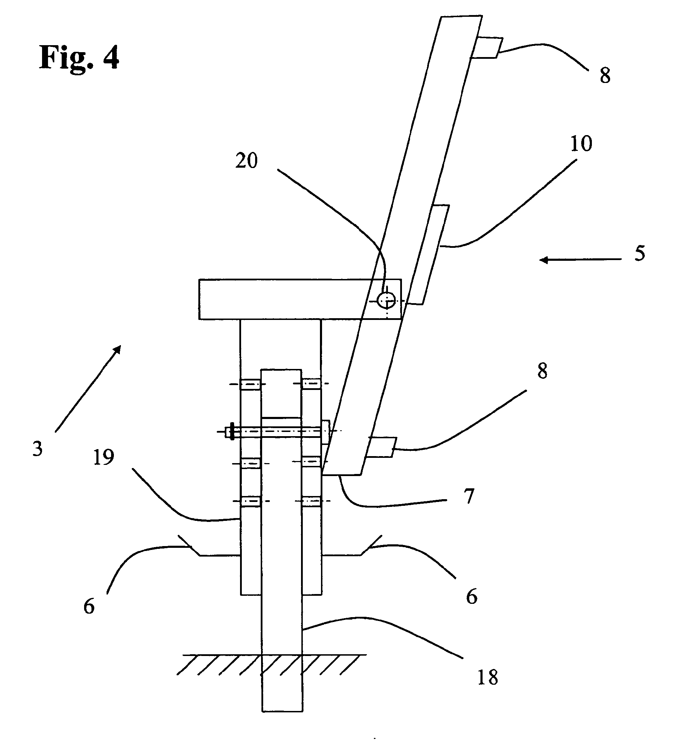

Suivant une caractéristique importante de la présente invention, ledit bâtiment (1) comporte un dispositif de transport (3). Ledit dispositif de transport (3) permet notamment la distribution de fourrage. Le dispositif de transport (3) permet également de séparer la surface au sol dudit bâtiment (1) afin de pouvoir former deux lots d'animaux. A la lumière de la figure 2, ledit dispositif de transport (3) est placé, selon une manière avantageuse, au milieu dudit bâtiment (1) dans le sens de la longueur. Selon la figure 3, ledit dispositif de transport (3) est constitué d'une poutre centrale (4) et d'une passerelle (5). Ladite poutre centrale (4) est fixée sur le sol ou scellée dans le sol. Sur ladite poutre centrale (4) sont fixées des auges (6) destinées à recevoir des granulés. Elles sont disposées en vis-à-vis de part et d'autre de la poutre centrale (4). Lesdites auges (6) sont fixées à une hauteur convenable selon les animaux présents dans ledit bâtiment (1).

Ladite passerelle (5) est liée au sommet de ladite poutre centrale (4). D'une manière préférentielle, ladite passerelle (5) est composée d'une structure métallique (7) formée à partir de tubes carrés. Ces tubes carrés sont liés par soudure. Ladite structure métallique (7) comporte avantageusement un rail (8) disposé sur la partie supérieure et de chaque côté de la passerelle (5). Lesdits rails (8) sont destinés à la circulation d'un chariot distributeur (13) qui permet la distribution de fourrage et/ou d'aliment. Ladite passerelle (5) comporte, en sus, une surface de marche (10) permettant le déplacement de l'éleveur.

D'une manière préférentielle, ledit dispositif de transport (3) est formé d'éléments modulaires d'environ deux mètres de longueur qui peuvent être assemblés à l'infini. Ainsi, ce dispositif de transport (3) peut facilement être adapté à chaque bâtiment (1).

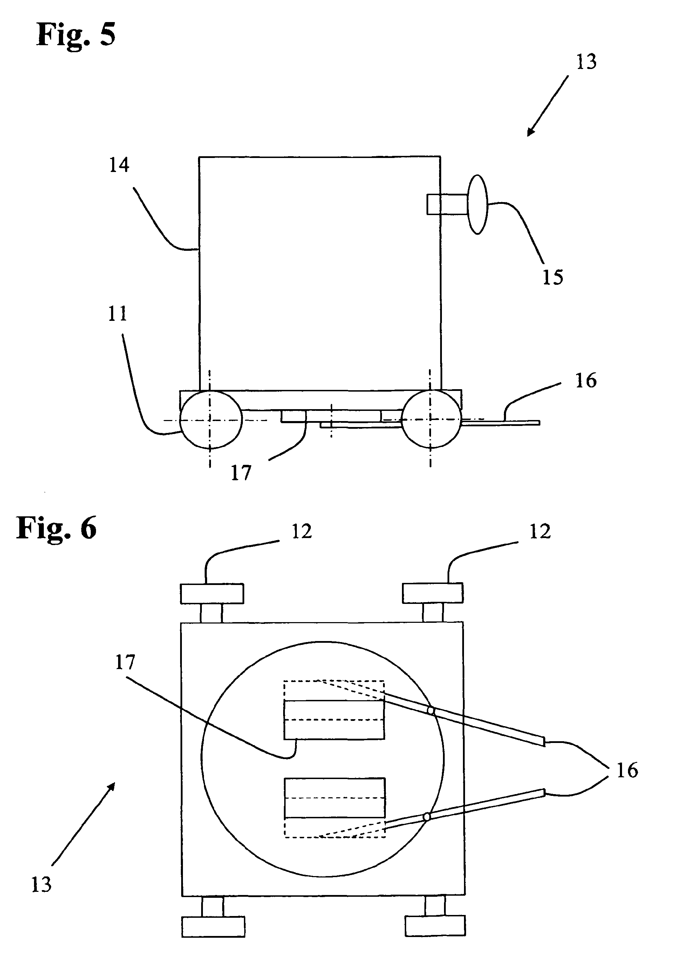

Les figures 5 et 6 représentent ledit chariot distributeur (13) conforme à l'invention. Ce chariot distributeur (13) comporte avantageusement des roues (11) permettant de déplacer aisément ledit chariot distributeur (13) par poussée manuelle sur lesdits rails (8). Lesdits rails (8) guident ledit chariot distributeur (13) sur toute la longueur de la passerelle (5). Ledit chariot distributeur (13) est plus spécifiquement employé pour la distribution d'aliment sous forme de granulés. A la lumière de la figure 5, ledit chariot distributeur (13) comporte un récipient (14) pouvant contenir les aliments. Ledit chariot distributeur (13) est poussé sur la passerelle (5) par l'éleveur au moyen d'une poignée (15). Selon la figure 6, ledit chariot distributeur (13) est également muni d'au moins un levier (16) commandé à l'aide du pied de l'éleveur. Le chariot distributeur (13) comporte encore au moins une trappe de distribution (17) permettant la distribution des aliments dans lesdites auges (6) situées en dessous de ladite passerelle (5). Le chariot distributeur (13) selon l'invention, comporte de préférence deux trappes de distribution (17). Chaque trappe de distribution (17) est commandée par un levier (16) correspondant. Une trappe de distribution (17) est située de chaque côté de ladite poutre (4) afin de pouvoir distribuer des aliments dans chaque auge (6). Grâce à ce système de distribution, il est donc possible de distribuer l'aliment sous forme de granulés uniquement d'un seul côté selon l'aménagement dudit bâtiment (1) et selon la présence ou non d'animaux. D'une manière préférentielle, l'ouverture des trappes de distribution (17) est réglable à l'aide desdits leviers (16) afin de pouvoir réguler le débit d'aliment, et ceci indépendamment du côté droit ou du côté gauche. A cet effet, la ration d'aliment par animal est ajustée selon le besoin.

Sur la figure 1, ladite passerelle (5) est située sensiblement au-dessus des animaux, ce qui libère de la place au sol pour les animaux. Les animaux mangent les aliments face à face et ne sont séparés que de la poutre centrale (4), donc d'une distance très faible. Les auges (6) pour l'alimentation n'occupent qu'un petit espace, le gain de place est donc considérable et entièrement utilisable par les animaux. De plus, ces auges (6) seront fixées l'une à l'autre pour qu'elles ne comportent pas d'obstacle contre lequel un animal pourrait s'étrangler.

Selon une autre caractéristique importante, ledit dispositif de transport (3) est réglable en hauteur et selon plusieurs paliers. Il est avantageux de bénéficier d'un tel système de réglage en hauteur durant la période hivernale car il permet de monter les auges (6) au fur et à mesure que la litière monte. La hauteur des auges (6) sera ainsi toujours à une hauteur accessible et favorable pour les animaux. A cet effet, la poutre centrale (4), dans l'exemple de réalisation de la figure 4, comporte avantageusement un tube (18) et un fourreau (19). Ledit tube (18) est lié au sol et supporte ledit fourreau (19). Le fourreau (19) comporte différents trous permettant de le fixer à différentes hauteur sur ledit tube (18). Les auges (6) sont de préférence liées auxdits fourreau (19).

Selon une autre caractéristique importante de l'invention, ledit dispositif de transport (3) est pivotant. A cet effet, ladite passerelle (5) est liée à la poutre centrale (4) au moyen d'une articulation (20) d'axe sensiblement horizontal. Il est particulièrement avantageux de pouvoir basculer ladite passerelle (5) pour l'évacuation de la litière usagée. Ceci évite un démontage de la passerelle (5).

Ledit dispositif de transport (3) peut également être utilisé comme une base de surveillance des animaux. L'éleveur peut se déplacer sur la surface de marche (10) de ladite passerelle (5) sans déranger les animaux. De plus, la passerelle (5) étant plus haute que les animaux, la surveillance est améliorée. Pour faciliter l'accès à la passerelle (5), il est prévu un escalier (21) permettant de monter sur la surface de marche (10). Afin de sécuriser le déplacement sur ladite passerelle (5), celle-ci est équipée de rampes de sécurité.

Il est bien évident que l'invention n'est pas limitée au mode de réalisation décrit et représenté sur les dessins annexés. Des modifications restent possibles, notamment en ce qui concerne la constitution des divers éléments ou par substitution d'équivalents techniques, sans pour autant sortir du domaine de protection tel qu'il est défini dans les revendications.

C'est ainsi qu'il est tout à fait possible que le dispositif de transport (3) soit utilisé dans une porcherie, dans une étable ou encore pour l'élevage de volailles.

Il est parfaitement imaginable que le dispositif de transport (3) ne soit pas placé au milieu du bâtiment (1) ou que plusieurs dispositif de transport (3) soit montés dans un même bâtiment (1).

Il est également envisageable que le dispositif de transport (3) comporte deux poutres (4) qui maintiennent ladite passerelle (5). Dans ce cas, une auge (6) sera fixée sur la partie extérieure de chaque poutre (4). Afin de conserver un maximum de place pour les animaux, lesdites poutres (4) ne seront pas espacées d'une trop grande distance.

Il est aussi concevable de combler une partie de l'espace entre un rail (8) et la surface de marche (10) en veillant à laisser suffisamment de place pour un bon écoulement des aliments qui sont distribués sous forme de concentrés.

## Revendications

1. Bâtiment (1) destiné à l'élevage délimitant une surface utile de déplacement pour des animaux et comportant un dispositif de transport (3) permettant la distribution d'aliment ***caractérisé par le fait* que** ledit dispositif de transport (3) est constitué d'une poutre centrale (4) et d'une passerelle (5) et que ledit dispositif de transport (3) comprend un chariot distributeur d'aliment (13), circulant sur ladite passerelle, avec deux trappes de distribution (17) qui sont situées de chaque côté de ladite poutre centrale (4) afin de pouvoir distribuer des aliments dans des auges (6) qui sont fixées sur ladite poutre centrale (4) et disposées en vis-à-vis de part et d'autre de ladite poutre centrale (4).

2. Bâtiment la revendication 1, ***caractérisé par le fait* que** ladite poutre centrale (4) comporte un tube (18) et un fourreau (19).

3. Bâtiment selon la revendication 1 ou 2, ***caractérisé par le fait* que** ledit dispositif de transport (3) est réglable en hauteur.

4. Bâtiment la revendication 3, ***caractérisé par le fait* que** la position dudit fourreau (19) par rapport audit tube (18) est réglable en hauteur.

5. Bâtiment selon l'une quelconque des revendications 1 à 4, ***caractérisé par le fait* que** ledit dispositif de transport (3) est pivotant.

6. Bâtiment selon la revendication 5, ***caractérisé par le fait* que** ladite passerelle (5) est liée à la poutre centrale (4) au moyen d'une articulation (20) d'axe sensiblement horizontal.

7. Bâtiment selon la revendication 1, ***caractérisé par le fait* que** ladite passerelle (5) est constitué d'une surface métallique (7) et d'une surface de marche (10)

8. Bâtiment selon la revendication 7, ***caractérisé par le fait* que** ladite structure métallique (7) comporte au moins un rail (8) permettant la circulation dudit chariot distributeur (13).

9. Bâtiment selon la revendication 8, ***caractérisé par le fait* que** ledit chariot distributeur (13) comporte des roues (11).

10. Bâtiment selon la revendication 8 ou 9, ***caractérisé par le fait* que** ledit chariot distributeur (13) équipé d'au moins un levier (16) commandant une trappe de distribution (17) respective.

11. Bâtiment selon l'une quelconque des revendications 1 à 10, ***caractérisé par le fait* que** ledit dispositif de transport (3) est constitué d'éléments modulaires.

## Claims

1. Farm building (1) intended to breeding delimiting a moving surface for animals and incorporating a transportation system (3) enabling the distribution of food, **characterized by** the fact that the so-called transportation system (3) is constituted by a central beam (4) and a bridge (5) and that the so-called transportation system (3) running on the so-called bridge (3) incorporates a food distribution cart (13), with two distribution traps (17) which are located on each side of the so-called central beam (4) in order to be able to distribute food in troughs (6) which are fixed on the so-called central beam (4) and facing each other on each side of the central beam (4).

2. Farm building according to claiming 1, **characterized by** the fact that the so-called central beam (4) incorporates a tube (18) and a sheath (19).

3. Farm building according to claiming 1 or 2, **characterized by** the fact that the so-called transportation system (3) is adjustable in height.

4. Farm building according to claiming 3, **characterized by** the fact that the position of the so-called sheath (19) in connection with the tube (18) is adjustable in height.

5. Farm building according to one of the claiming 1 to 4, **characterized by** the fact that the so-called transportation system (3) is pivoting.

6. Farm building according to claiming 5, **characterized by** the fact that the so-called bridge (5) is connected to the central beam (4) by means of an axis articulation (20) appreciably horizontal.

7. Farm building according to claiming 1, **characterized by** the fact that the so-called bridge (5) consists in a metallic surface (7) and in a walking track (10).

8. Farm building according to claiming 7, **characterized by** the fact that the so-called metallic frame (7) has at least one rail (8) enabling the run of the so-called distribution cart (13).

9. Farm building according to claiming 8, **characterized by** the fact that the so-called distribution cart (13) is fitted with wheels (11).

10. Farm building according to claiming 8 or 9, **characterized by** the fact that the so-called distribution cart (13) equipped with at least one lever (16) controlling a corresponding distribution trap (17).

11. Farm building according to one of the claiming 1 to 10, **characterized by** the fact that the so-called transportation system (3) is made of modular elements.

## Patentansprüche

1. Stall (1) für Zuchtzwecke mit Abtrennungen zur Eingrenzung einer Bodenfläche als Bewegungsraum für die Tiere und mit einem Transportsystem (3) zur Futterverteilung **dadurch gekennzeichnet, dass** das beschriebene Transportsystem (3) aus einem zentralen Pfeiler (4) und einem Steg (5) besteht und dass das beschriebene Transportsystem (3) einen Verteilerwagen (13) geführt auf dem beschriebenen Steg (5) beträgt mit zwei Verteilungsklappen (17) die sich an jeder Seite des zentralen Pfeilers (4) befinden zur Verteilung von Futter in Tröge (6) auf dem zentralen Pfeiler (4) und gegenüberliegend auf beiden Seiten des zentrales Pfeilers (4) befestigt.

2. Stall nach Vorgabe 1 **gekennzeichnet dadurch dass** der beschriebene zentrale Pfeiler (4) mit einer Stange (18) und einem Rohr (19) bestückt ist.

3. Stall nach Vorgabe 1 oder 2 **dadurch gekennzeichnet dass** das beschriebene Transportsystem (3) in der Höhe verstellbar ist.

4. Stall nach Vorgabe 3 **gekennzeichnet dadurch dass** die Lage des beschriebenen Rohres (19) im Verhältnis zu der beschriebenen Stange (18) in der Höhe verstellbar ist.

5. Stall je nach beliebiger Vorgabe 1 bis 4 **gekennzeichnet dadurch dass** das beschriebene Transportsystem (3) kippbar ist.

6. Stall nach Vorgabe 5 **gekennzeichnet dadurch dass** der beschriebene Steg (5) durch ein nahezu senkrechtes Gelenk (20) mit dem zentralen Pfeiler (4) verbunden ist.

7. Stall nach Vorgabe 1 **gekennzeichnet dadurch dass** der beschriebene Steg (5) eine metallische Fläche (7) und eine begehbare Fläche (10) beträgt.

8. Stall nach Vorgabe 7 **gekennzeichnet dadurch dass** die beschriebene metallische Struktur (7) mindestens eine Schiene (8) zur Führung des beschriebenen Verteilerwagens (13) beträgt.

9. Stall nach Vorgabe 8 **gekennzeichnet dadurch dass** der beschriebene Verteilerwagen (13) mit Räder (11) bestückt ist.

10. Stall nach Vorgabe 8 oder 9 **gekennzeichnet dadurch dass** der beschriebene Verteilerwagen (13) mindestens mit einem Hebel (16) zur Bedienung der zugehörigen Verteilerklappe (17) ausgerüstet ist.

11. Stall je nach beliebiger Vorgabe 1 bis 10 **gekennzeichnet dadurch dass** das beschriebene Transportsystem (3) aus modularen Elementen besteht.
